(19) Europäisches Patentamt
European Patent Office
Office européen des brevets

(11) **EP 3 880 526 B1**

(12) **FASCICULE DE BREVET EUROPEEN**

(45) Date de publication et mention
de la délivrance du brevet:
**03.12.2025 Bulletin 2025/49**

(21) Numéro de dépôt: **19790221.6**

(22) Date de dépôt: **25.10.2019**

(51) Classification Internationale des Brevets (IPC):
**B60W 10/184** (2012.01)  **B60W 10/20** (2006.01)

(52) Classification Coopérative des Brevets (CPC):
**B60T 8/17558; B60W 10/184; B60W 10/20;
B60W 30/09;** B60T 2201/022; B60T 2260/02;
B60W 2520/14; B60W 2540/18; B60W 2552/30;
B60W 2720/14

(86) Numéro de dépôt international:
**PCT/EP2019/079121**

(87) Numéro de publication internationale:
**WO 2020/099098 (22.05.2020 Gazette 2020/21)**

(54) **PROCÉDÉ ET SYSTÈME D'ÉVITEMENT D'OBSTACLES COMPRENANT LA COMMANDE DES SYSTÈMES DE BRAQUAGE ET DE FREINAGE DIFFÉRENTIEL**

VERFAHREN UND SYSTEM ZUR HINDERNISVERMEIDUNG, EINSCHLIESSLICH DER STEUERUNG VON LENK- UND DIFFERENZIALBREMSSYSTEMEN

METHOD AND SYSTEM FOR OBSTACLE AVOIDANCE, INVOLVING THE CONTROL OF STEERING AND DIFFERENTIAL BRAKING SYSTEMS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **13.11.2018 FR 1860461**

(43) Date de publication de la demande:
**22.09.2021 Bulletin 2021/38**

(73) Titulaires:
• **Ampere SAS**
**92100 Boulogne-Billancourt (FR)**
• **NISSAN MOTOR CO., LTD.**
**Yokohama-shi, Kanagawa 221-0023 (JP)**

(72) Inventeur: **DO, Anh Lam**
**92160 Antony (FR)**

(74) Mandataire: **Casalonga**
**31 Rue de Fleurus**
**75006 Paris (FR)**

(56) Documents cités:
**EP-A1- 3 056 404      WO-A1-2008/071926
WO-A1-2015/071052   WO-A2-2012/060555
FR-A1- 3 041 590       JP-A- 2018 167 732
US-A1- 2016 311 416**

## Description

### Domaine technique

La présente invention concerne le domaine des véhicules automobiles, et notamment les systèmes d'aide à la conduite pour la prévention des collisions.

Les accidents provoqués par des collisions, par exemple avec un autre véhicule, un piéton ou un cycliste, à la suite de situations d'urgence représentent un pourcentage important des accidents de la route.

Il est connu d'utiliser des systèmes d'aide à la conduite, par exemple, le système de freinage d'urgence automatique dit « automatic emergency braking », d'acronyme « AEB » en termes anglo-saxons, pour éviter la collision entre le véhicule automobile et un obstacle se trouvant sur la voie dudit véhicule, en utilisant le système de freinage conventionnel. Toutefois, de nombreuses situations ne sont pas gérées efficacement par un tel système de freinage d'urgence, notamment lorsque le véhicule automobile roule à une vitesse élevée. En effet, il n'est pas possible d'éviter la collision ou de freiner lorsque le véhicule automobile roule à vitesse élevée et qu'un autre véhicule se trouve à l'arrière dudit véhicule. Dans une telle situation, il est préférable de braquer les roues du véhicule afin d'effectuer une trajectoire d'évitement latéral.

On connait les systèmes d'aide à la conduite dit « automatic evasive steering », d'acronyme « AES » en termes anglo-saxons, qui permet d'éviter les collisions en activant un système de braquage/freinage différentiel pendant une durée limitée afin d'éviter une collision avec un obstacle. L'obstacle peut se trouver sur la même voie que le véhicule automobile ou sur une voie adjacente.

Un des objectifs dans la conception d'un système AES fiable et sécurisant concerne l'élaboration d'un contrôleur performant, optimal et robuste capable de réaliser des trajectoires d'évitement prédéfinies. Dans le cas extrême, il s'agit d'un changement automatique de voie à une vitesse longitudinale pouvant aller jusqu'à 160 km/h.

Les limites de contrôlabilité et de stabilité du véhicule automobile ont un fort impact sur la capacité du contrôleur AES à agir. En effet, le couple demandé par le contrôleur AES à la direction assistée électrique doit être limité en amplitude et en rampe afin qu'un conducteur puisse toujours reprendre en main le contrôle du volant. De plus, la dynamique du véhicule, tel que notamment l'angle de dérive, la vitesse du lacet, doit être limitée pour éviter la perte d'adhérence pneu-sol qui pourrait mettre le conducteur en danger.

Afin de contourner ces limites de contrôlabilité et de stabilité du véhicule automobile, il est connu de mélanger le système de braquage avec le système de freinage différentiel. En effet, le système de braquage est particulièrement efficace à des vitesses moyennes alors que le système de freinage différentiel améliore la dynamique du véhicule à des vitesses élevées. De plus, la combinaison des deux actionneurs garantit une bonne stabilité du véhicule et permet, par exemple, de réduire le glissement pendant la manœuvre d'évitement en virage serré.

### Techniques antérieures

On peut se référer, par exemple, au document WO 2007 73 772 - A1 qui décrit un système configuré pour contrôler à la fois le système de braquage et de freinage différentiel afin d'éviter le risque de survirage d'un véhicule. Toutefois, ce document ne propose aucun modèle dynamique du véhicule.

On peut également se référer au document FR 2 695 613 - A1 qui décrit un procédé de correction automatique d'amorçage de mouvement de lacet d'un véhicule automobile de type routier en appliquant un couple de freinage sur une ou des roues du véhicule. Ce document ne propose pas de procédé d'évitement d'obstacles.

On connait également les documents EP 1 790 542 - A1 et KR 10 085 11 20 qui concerne des procédés d'évitement de sortie de voie basés uniquement sur le système de freinage différentiel des roues. Toutefois, ces documents ne traitent pas le problème de suivi de la trajectoire d'évitement d'obstacles, ni celui de la contrôlabilité et stabilité du véhicule.

On connait également le document JP 2018 167732 - A2 qui concerne un dispositif de contrôle de la marche d'un véhicule comprenant l'utilisation d'un contrôleur feed-forward par rapport à la courbure de la trajectoire.

Il existe donc un besoin d'optimiser le contrôle simultané des deux systèmes de braquage et de freinage différentiel dans un contexte d'évitement automatique d'obstacles afin de réaliser des trajectoires d'évitement tenant compte des limites de contrôlabilité liées au couple du véhicule et de stabilité du véhicule automobile.

### Exposé de l'invention

Le but de l'invention est donc de propose un système et un procédé d'évitement d'obstacles fiable et simple.

La présente invention a pour objet un procédé d'évitement d'obstacles dans lequel :

- on détecte un obstacle à proximité d'un véhicule automobile et on planifie une trajectoire d'évitement dudit obstacle, et

- on commande des systèmes de braquage et/ou de freinage différentiel configuré pour maîtriser la trajectoire d'évitement, et
- dans le cas où la courbure de la trajectoire n'est pas nulle, on calcule un contrôleur feed-forward configuré pour compenser l'effet de la dérivée de la trajectoire sur l'erreur de suivi de trajectoire et rendre l'erreur à zéro en régime établi, dans lequel on introduit un paramètre dans le pilotage du système de freinage différentiel configuré pour gérer les actions du braquage et du freinage différentiel en même temps, lorsque le paramètre est égal à zéro, le freinage différentiel n'est pas nécessaire, seul le braquage est suffisant pour faire la trajectoire d'évitement, lorsque le paramètre est égal à 1, on utilise la capacité totale du freinage différentiel pour aider au braquage à faire un manœuvre d'évitement dynamique.

Avantageusement, lors de la commande des systèmes de braquage et/ou de freinage différentiel, on définit une contrainte de contrôlabilité lors de laquelle le couple de braquage est limité en amplitude et en rampe et définit une contrainte de stabilité lors de laquelle le glissement et la vitesse de lacet du véhicule sont bornés.

Par exemple, on vérifie si la contrainte de contrôlabilité est respectée, et si ladite contrainte est respectée, on commande uniquement le braquage des roues.

En effet, dans ce cas, le braquage des roues est suffisant pour réaliser la manœuvre d'évitement une fois que le couple de braquage demandé est borné par les barrières de contrôlabilité. La contribution du freinage différentiel est ici nul.

Si, au contraire, ladite contrainte n'est pas respectée, on commande le système de freinage différentiel.

Par exemple, lorsque le rapport entre l'écart latéral d'évitement et la distance longitudinale d'évitement est trop important.

Le freinage différentiel doit intervenir dans ce cas pour aider au braquage et suivre correctement la trajectoire d'évitement. Sans la contribution du freinage différentiel, la trajectoire réalisée serait erronée et pourrait mettre en danger le véhicule automobile.

Le paramètre $\alpha_{DB}$ est le seul paramètre à contrôler pour gérer le système de braquage et de freinage différentiel.

On peut, par exemple, émettre les hypothèses suivantes :

- le couple de braquage ne dépasse pas la limite de contrôlabilité en amplitude et en rampe,
- la trajectoire d'évitement est prédéfinie,
- le comportement du freinage différentiel est modélisé par un moment de lacet ; et
- la courbure de la trajectoire est nulle.

Selon un deuxième aspect, l'invention concerne un module de commande des systèmes de braquage et/ou de freinage différentiel configuré pour émettre une consigne de braquage des roues à un calculateur de braquage des roues d'un véhicule automobile et une consigne de moment de lacet à un calculateur de freinage dudit véhicule automobile.

Avantageusement, le module comprend un contrôleur en boucle fermée pour le système de braquage configuré pour suivre la trajectoire d'évitement de référence et répondant à la contrainte de stabilité du véhicule.

Par exemple, le module comprend en outre un contrôleur feed-forward configuré pour compenser l'effet de la dérivée de la trajectoire sur l'erreur de suivi de trajectoire.

Le module peut également comprendre un contrôleur en boucle fermée pour le système de freinage différentiel configuré pour améliorer la performance de la boucle de braquage, notamment en cas de saturation de couple et la stabilité du véhicule.

Selon un troisième aspect, l'invention concerne un système d'évitement d'obstacles comprenant un module de détection d'un obstacle à proximité d'un véhicule automobile et de planification d'une trajectoire d'évitement dudit obstacle et un module de commande des systèmes de braquage et/ou de freinage différentiel tel que décrit précédemment.

Selon un autre aspect, l'invention concerne un véhicule automobile comprenant un système pour repérer le véhicule automobile par rapport à sa voie de circulation, tel que par exemple une caméra frontale, et capable de déterminer l'écart latéral par rapport aux lignes de circulation à une distance de visé et l'angle de cap relatif dudit véhicule, un système de détection des obstacles dans la trajectoire du véhicule, par exemple un radar frontal, configuré pour déterminer la distance longitudinale et le chevauchement de l'obstacle par rapport audit véhicule, un gyromètre, une direction automatique assistée, un module de commande des systèmes de braquage) et/ou de freinage différentiel tel que décrit précédemment, un calculateur configuré pour transformer la consigne d'angle de braquage dudit module de commande en limite de couple à la direction assistée pour réaliser le braquage, un calculateur configuré pour transformer la consigne de moment de lacet dudit module de commande en couples aux roues pour réaliser le freinage différentiel et un capteur de mesure de l'angle de volant et de sa vitesse.

### Brève description des dessins

D'autres buts, caractéristiques et avantages de l'invention apparaîtront à la lecture de la description suivante, donnée uniquement à titre d'exemple non limitatif, et faite en référence aux dessins annexés sur lesquels :

- la figure 1 représente schématiquement une manœuvre d'évitement d'un obstacle par un système d'évitement d'obstacles comprenant un module de commande des systèmes de braquage (DAE) et/ou de freinage différentiel configuré pour maîtriser la trajectoire d'évitement selon l'invention ;
- la figure 2 représente schématiquement le système d'évitement d'obstacles de la figure 1 ;
- la figure 3 illustre un organigramme d'un procédé d'évitement d'obstacles mis en œuvre par le système de la figure 1 ;
- la figure 4 illustre en détails l'étape de commande des systèmes de braquage (DAE) et/ou de freinage différentiel configuré pour maîtriser la trajectoire d'évitement.

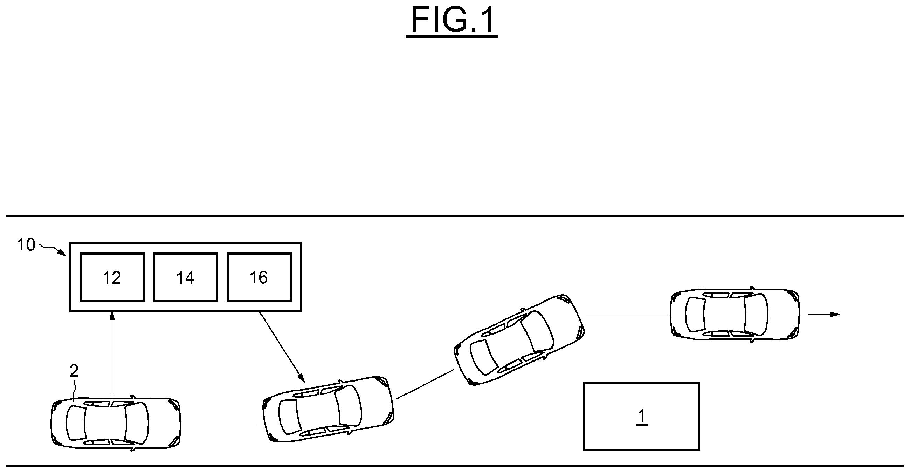

Sur la figure 1, on a représenté de manière très schématique une manœuvre d'évitement d'un obstacle par un système 10 d'évitement d'obstacles.

Le système 10 d'évitement d'obstacles comprend un module 12 de détection d'un obstacle 1 à proximité d'un véhicule automobile 2 et de planification d'une trajectoire d'évitement dudit obstacle, un module 14 de commande des systèmes de braquage (DAE) et/ou de freinage différentiel configuré pour maîtriser la trajectoire d'évitement et un module 16 d'arrêt de la commande des systèmes de braquage (DAE) et/ou de freinage différentiel dès que le véhicule automobile se trouve à une distance prédéterminée dudit obstacle 1.

Le véhicule automobile 2 comprend un système pour repérer le véhicule automobile par rapport à sa voie de circulation, tel que par exemple une caméra frontale, et capable de déterminer l'écart latéral par rapport aux lignes de circulation à une distance de visé yL et l'angle de cap relatif dudit véhicule $\Psi L$. Le véhicule automobile 2 est également doté d'un système de détection des obstacles dans la trajectoire du véhicule, par exemple un radar frontal, configuré pour déterminer la distance longitudinale et le chevauchement de l'obstacle par rapport audit véhicule.

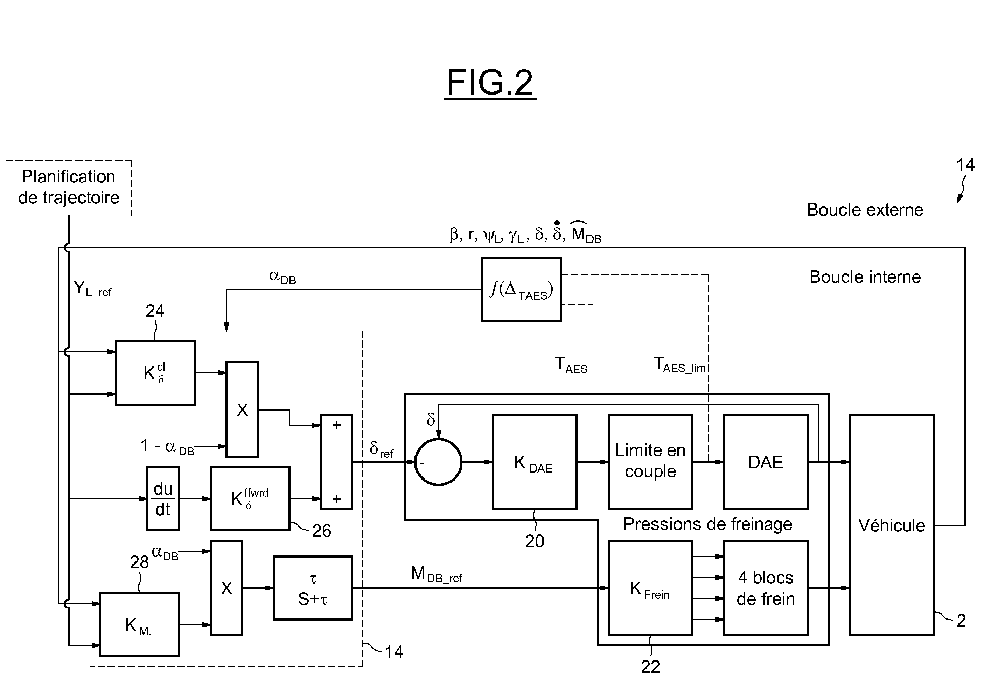

Tel qu'illustré sur la figure 2, le véhicule automobile 2 comprend également un gyromètre (non représenté), une direction automatique assistée DAE capable de réaliser la consigne de couple générée par le module 14 de commande des systèmes de braquage (DAE) et/ou de freinage différentiel, un calculateur 20 configuré pour transformer la consigne d'angle de braquage en limite de couple à la direction assistée DAE pour réaliser le braquage, un bloc de frein BLOC FREIN capable de réaliser la consigne de couple générée par le module 14 de commande des systèmes de braquage (DAE) et/ou de freinage différentiel, un calculateur 22 configuré pour transformer la consigne de moment de lacet en couples aux roues pour réaliser le freinage différentiel et un capteur de mesure de l'angle de volant et de sa vitesse.

Le module 14 de commande des systèmes de braquage (DAE) et/ou de freinage différentiel est configuré pour émettre une consigne $\delta$ref de braquage des roues au calculateur 20 de braquage des roues et une consigne MDB_Ref de moment de lacet au calculateur 22.

Le module 14 de commande des systèmes de braquage (DAE) et/ou de freinage différentiel comprend un contrôleur 24 en boucle fermée pour le système de braquage configuré pour suivre la trajectoire d'évitement de référence et répondant à la contrainte de stabilité du véhicule.

Le module 14 de commande des systèmes de braquage (DAE) et/ou de freinage différentiel comprend en outre un contrôleur 26 feed-forward configuré pour compenser l'effet de la dérivée de la trajectoire sur l'erreur de suivi de trajectoire.

Enfin, le module 14 de commande des systèmes de braquage (DAE) et/ou de freinage différentiel comprend un contrôleur 28 en boucle fermée pour le système de freinage différentiel configuré pour améliorer la performance de la boucle de braquage, notamment en cas de saturation de couple et la stabilité du véhicule.

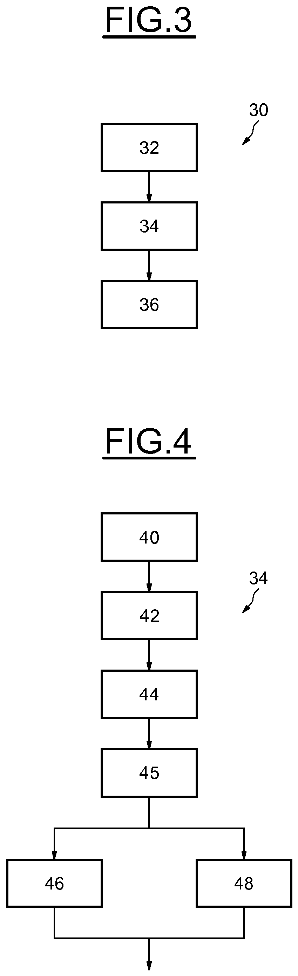

Tel qu'illustré sur la figure 3, le procédé 30 d'évitement d'obstacles comprend une étape 32 de détection d'un obstacle 1 à proximité d'un véhicule automobile 2 et de planification d'une trajectoire d'évitement dudit obstacle, une étape 34 de commande des systèmes de braquage (DAE) et/ou de freinage différentiel configuré pour maîtriser la trajectoire d'évitement et une étape 36 d'arrêt de la commande des systèmes de braquage (DAE) et/ou de freinage différentiel dès que le véhicule automobile se trouve à une distance prédéterminée dudit obstacle 1.

La figure 4 illustre en détails l'étape 34 de commande des systèmes de braquage (DAE) et/ou de freinage différentiel configuré pour maîtriser la trajectoire d'évitement.

Pour modéliser la dynamique du véhicule automobile contrôlé par le système de braque et le système de freinage différentiel, on fait, à l'étape 40, les hypothèses suivantes :

Lorsque le couple de braquage ne dépasse pas la limite de contrôlabilité en amplitude et en rampe, le comportement de la direction assistée est modélisé par l'équation suivante :

Avec

[Math 1]

$$\begin{pmatrix} \ddot{\delta} \\ \dot{\delta} \end{pmatrix} = \begin{bmatrix} -2\xi\omega & -\omega^2 \\ 1 & 0 \end{bmatrix} \begin{pmatrix} \dot{\delta} \\ \delta \end{pmatrix} + \begin{pmatrix} \omega^2 \\ 0 \end{pmatrix} \delta_{ref}$$

Avec :

$\delta$, l'angle entre les roues avant et l'axe longitudinal du véhicule, exprimé en rad ;
$\delta_{ref}$, la consigne d'angle des roues avant, exprimée en rad ; et
$\xi$ et $\omega$, deux constantes représentant les caractéristiques de l'angle réel des roues avant.

On fait également comme hypothèse que la trajectoire d'évitement est prédéfinie, que le comportement du freinage différentiel est modélisé par un moment de lacet. En effet, la réalisation de ce moment de lacet est faite par les blocs de freins contrôlés par un calculateur embarqué dans le véhicule et qui traduit la consigne de moment de lacet en couples de freinage appliqués à chaque roue.

On fait enfin l'hypothèse que la courbure est supposée nulle. Dans le cas où la courbure n'est pas nulle, un contrôleur $K_\delta^{ffwrd}$, par exemple de type feed-forward, peut être facilement calculé pour éliminer l'effet de la courbure sur le suivi de trajectoire.

Si le moment de lacet par un freinage différentiel ne peut pas être estimé, on considère l'équation suivante :

[Math 2]

$$\begin{pmatrix} \dot{\beta} \\ \dot{r} \\ \dot{\psi}_L \\ \dot{y}_L \\ \ddot{\delta} \\ \dot{\delta} \end{pmatrix} = \begin{bmatrix} -\dfrac{C_f + C_r}{mV} & 1 + \dfrac{C_r l_r - C_f l_f}{mV^2} & 0 & 0 & 0 & \dfrac{C_f}{mV} \\ -\dfrac{C_f l_f - C_r l_r}{J} & -\dfrac{C_r l_r^2 + C_f l_f^2}{JV} & 0 & 0 & 0 & \dfrac{C_f l_f}{J} \\ 0 & 1 & 0 & 0 & 0 & 0 \\ V & l_s & V & & 0 & 0 & 0 \\ 0 & 0 & 0 & & 0 & -2\xi\omega & -\omega^2 \\ 0 & 0 & 0 & & 0 & 1 & 0 \end{bmatrix} \begin{pmatrix} \beta \\ r \\ \psi_L \\ y_L \\ \dot{\delta} \\ \delta \end{pmatrix} + \begin{bmatrix} 0 \\ 0 \\ 0 \\ 0 \\ \omega^2 \\ 0 \end{bmatrix} (1 - \alpha_{DB})\delta_{ref}$$

$$+ \begin{bmatrix} 0 \\ \dfrac{1}{J} \\ 0 \\ 0 \\ 0 \\ 0 \end{bmatrix} \alpha_{DB} M_{DB}$$

Avec :

$\beta$, l'angle de dérive, exprimé en rad ;
r, la vitesse de lacet, exprimée en rad/s ;
$y_L$, l'écart latéral entre l'axe du véhicule et la tangente à la trajectoire avant du véhicule, exprimé en m ;

$\Psi_L$, l'angle relatif de cap entre l'axe du véhicule et la tangente à la trajectoire de référence, exprimé en rad/s ; et
$\delta$, l'angle entre les roues avant et l'axe longitudinal du véhicule, exprimé en rad ;

$c_f$, la rigidité de dérive des roues avant, exprimée en N/rad ;
$c_r$, la rigidité de dérive des roues avant, exprimée en N/rad ;
V, la vitesse du véhicule selon l'axe longitudinal, exprimée en m/s ;
$M_{DB\_ref}$, la consigne de moment de lacet, exprimée en N.m ;
$\alpha_{DB}$, le paramètre de gestion des actions de braquage et de freinage différentiel, sans unité.

Si le moment de lacet par un freinage différentiel peut être estimé, on considère l'équation suivante :

[Math 3]

$$
\begin{pmatrix} \dot{\beta} \\ \dot{r} \\ \dot{\psi}_L \\ \dot{y}_L \\ \ddot{\delta} \\ \dot{\delta} \\ \dot{\widehat{M}}_{DB} \end{pmatrix} = \begin{bmatrix} -\dfrac{C_f + C_r}{mV} & 1 + \dfrac{C_r l_r - C_f l_f}{mV^2} & 0 & 0 & 0 & \dfrac{C_f}{mV} & 0 \\ -\dfrac{C_f l_f - C_r l_r}{J} & -\dfrac{C_r l_r^2 + C_f l_f^2}{JV} & 0 & 0 & 0 & \dfrac{C_f l_f}{J} & \boldsymbol{\alpha_{DB}}{J} \\ 0 & 1 & 0 & 0 & 0 & 0 & 0 \\ V & l_s & V & 0 & 0 & 0 & 0 \\ 0 & 0 & 0 & 0 & -2\xi\omega & -\omega^2 & 0 \\ 0 & 0 & 0 & 0 & 1 & 0 & 0 \\ 0 & 0 & 0 & 0 & 0 & 0 & -\tau \end{bmatrix} \begin{pmatrix} \beta \\ r \\ \psi_L \\ y_L \\ \dot{\delta} \\ \delta \\ \widehat{M}_{DB} \end{pmatrix}
$$

$$
+ \begin{bmatrix} 0 \\ 0 \\ 0 \\ 0 \\ \omega^2 \\ 0 \\ 0 \end{bmatrix} (\boldsymbol{1} - \boldsymbol{\alpha_{DB}})\delta_{ref} + \begin{bmatrix} 0 \\ 0 \\ 0 \\ 0 \\ 0 \\ 0 \\ \tau \end{bmatrix} M_{DB\_ref}
$$

Avec :

$\dot{\widehat{M}}_{DB}$ , le moment de lacet, exprimée en N.m.

La dynamique du système de freinage différentiel s'écrit selon l'équation suivante :

[Math 4]

$$
\dot{\widehat{M}}_{DB} = -\tau\widehat{M}_{DB} + \tau M_{DB\_ref}
$$

Avec :

$M_{DB\_ref}$, la consigne de moment de lacet, exprimée en N.m ; et

$\widehat{M}_{DB}$, le moment de lacet, exprimée en N.m.

Ainsi, on introduit le moment de lacet (rotation) et sa dynamique dans le pilotage du système de freinage différentiel. De plus, l'introduction du paramètre $\alpha_{DB} \in$ [0,1] permet de gérer les actions du braquage et du freinage différentiel en même temps. Quand $\alpha_{DB}$ = 0, le freinage différentiel n'est pas nécessaire, seul le braquage est suffisant pour faire la trajectoire d'évitement. Quand $\alpha_{DB}$ = 1, on pourrait profiter de la capacité totale du freinage différentiel pour aider au braquage à faire un manœuvre d'évitement dynamique. Toutefois, l'utilisation de 100% du freinage différentiel n'est pas toujours nécessaire, c'est le cas où $\alpha$ prend des valeurs comprises entre 0 et 1.

L'étape 34 de commande des systèmes de braquage (DAE) et/ou de freinage différentiel comprend en outre une étape 42 de définition d'une contrainte de contrôlabilité lors de laquelle le couple TAES est limité en amplitude et en rampe et une étape 44 de définition d'une contrainte de stabilité lors de laquelle le glissement et la vitesse de lacet r du véhicule sont bornés.

L'équation Math 3 se réécrit comme suit :

[Math 5]

$$\begin{pmatrix} \dot{\beta} \\ \dot{r} \\ \dot{\psi}_L \\ \dot{e}_{yL} \\ \ddot{\delta} \\ \dot{\delta} \\ \dot{\widehat{M}}_{DB} \end{pmatrix} = \begin{bmatrix} -\dfrac{C_f + C_r}{mV} & 1 + \dfrac{C_r l_r - C_f l_f}{mV^2} & 0 & 0 & 0 & \dfrac{C_f}{mV} & 0 \\ -\dfrac{C_f l_f - C_r l_r}{J} & -\dfrac{C_r l_r^2 + C_f l_f^2}{JV} & 0 & 0 & 0 & \dfrac{C_f l_f}{J} & \dfrac{\alpha_{DB}}{J} \\ 0 & 1 & 0 & 0 & 0 & 0 & 0 \\ V & l_s & V & 0 & 0 & 0 & 0 \\ 0 & 0 & 0 & 0 & -2\xi\omega & -\omega^2 & 0 \\ 0 & 0 & 0 & 0 & 1 & 0 & 0 \\ 0 & 0 & 0 & 0 & 0 & 0 & -\tau \end{bmatrix} \begin{pmatrix} \beta \\ r \\ \psi_L \\ e_{yL} \\ \dot{\delta} \\ \delta \\ \widehat{M}_{DB} \end{pmatrix}$$

$$+ \begin{bmatrix} 0 \\ 0 \\ 0 \\ 0 \\ \omega^2 \\ 0 \\ 0 \end{bmatrix} (\mathbf{1} - \boldsymbol{\alpha_{DB}})\delta_{ref} + \begin{bmatrix} 0 \\ 0 \\ 0 \\ 0 \\ 0 \\ 0 \\ \tau \end{bmatrix} M_{DB\_ref} + \begin{bmatrix} 0 \\ 0 \\ 0 \\ -1 \\ 0 \\ 0 \\ 0 \end{bmatrix} \dot{y}_{L\_ref}$$

Avec :

[Math 6]

$$e_{yL} = y_L - y_{L_{ref}}$$

L'équation Math 4 s'écrit sous la forme d'un système de paramètres linéaires variants comme suit :

[Math 7]

$$\dot{x} = A(\boldsymbol{\alpha_{DB}})x + B_\delta(\mathbf{1} - \boldsymbol{\alpha_{DB}})\delta_{ref} + B_M M_{DB\_ref} + B_y \dot{y}_{L\_ref}$$

Avec :

[Math 8]

$$x = \begin{pmatrix} \beta \\ r \\ \psi_L \\ e_{yL} \\ \dot{\delta} \\ \delta \\ \widehat{M}_{DB} \end{pmatrix}, \quad B_\delta = \begin{bmatrix} 0 \\ 0 \\ 0 \\ 0 \\ \omega^2 \\ 0 \\ 0 \end{bmatrix}, \quad B_M = \begin{bmatrix} 0 \\ 0 \\ 0 \\ 0 \\ 0 \\ 0 \\ \tau \end{bmatrix}, \quad B_y = \begin{bmatrix} 0 \\ 0 \\ 0 \\ -1 \\ 0 \\ 0 \\ 0 \end{bmatrix}$$

$$A(\alpha_{DB}) = \begin{bmatrix} -\dfrac{C_f + C_r}{mV} & 1 + \dfrac{C_r l_r - C_f l_f}{mV^2} & 0 & 0 & 0 & \dfrac{C_f}{mV} & 0 \\[3mm] -\dfrac{C_f l_f - C_r l_r}{J} & -\dfrac{C_r l_r^2 + C_f l_f^2}{JV} & 0 & 0 & 0 & \dfrac{C_f l_f}{J} & \dfrac{\alpha_{DB}}{J} \\[2mm] 0 & 1 & 0 & 0 & 0 & 0 & 0 \\ V & l_s & V & 0 & 0 & 0 & 0 \\ 0 & 0 & 0 & 0 & -2\xi\omega & -\omega^2 & 0 \\ 0 & 0 & 0 & 0 & 1 & 0 & 0 \\ 0 & 0 & 0 & 0 & 0 & 0 & -\tau \end{bmatrix}$$

L'étape 34 de commande des systèmes de braquage (DAE) et/ou de freinage différentiel comprend en outre une étape 45 de vérification si la contrainte de contrôlabilité n'est pas ou plus respectée et une étape 46 de commande du système de braquage pour les cas où la contrainte de contrôlabilité est respectée. Seul le braquage des roues est suffisant pour réaliser la manœuvre d'évitement une fois que le couple de braquage demandé est borné par les barrières de contrôlabilité. La contribution du freinage différentiel est ici nul.

Dans ce cas, le modèle suivant est considéré pour la synthèse de la loi de commande :

[Math 9]

$$\begin{pmatrix} \dot{\beta} \\ \dot{r} \\ \dot{\psi}_L \\ \dot{e}_{yL} \\ \ddot{\delta} \\ \dot{\delta} \end{pmatrix} = \begin{bmatrix} -\dfrac{C_f + C_r}{mV} & 1 + \dfrac{C_r l_r - C_f l_f}{mV^2} & 0 & 0 & 0 & \dfrac{C_f}{mV} \\[3mm] -\dfrac{C_f l_f - C_r l_r}{J} & -\dfrac{C_r l_r^2 + C_f l_f^2}{JV} & 0 & 0 & 0 & \dfrac{C_f l_f}{J} \\[2mm] 0 & 1 & 0 & 0 & 0 & 0 \\ V & l_s & V & 0 & 0 & 0 \\ 0 & 0 & 0 & 0 & -2\xi\omega & -\omega^2 \\ 0 & 0 & 0 & 0 & 1 & 0 \end{bmatrix} \begin{pmatrix} \beta \\ r \\ \psi_L \\ e_{yL} \\ \dot{\delta} \\ \delta \end{pmatrix} + \begin{bmatrix} 0 \\ 0 \\ 0 \\ 0 \\ \omega^2 \\ 0 \end{bmatrix} \delta_{ref} + \begin{bmatrix} 0 \\ 0 \\ 0 \\ -1 \\ 0 \\ 0 \end{bmatrix} \dot{y}_{L\_ref}$$

Avec :

$$\alpha_{DB} = 0.$$

L'équation Math 9 peut s'écrire selon l'équation suivante :

[Math 10]

$$\dot{\bar{x}} = \bar{A}\bar{x} + \bar{B}_\delta \delta_{ref} + \bar{B}_y \dot{y}_{L\_ref}$$

Avec :

[Math 11]

$$\bar{x} = \begin{pmatrix} \beta \\ r \\ \psi_L \\ e_{yL} \\ \dot{\delta} \\ \dot{\delta} \end{pmatrix}$$

[Math 12]

$$\bar{A} = \begin{bmatrix} -\dfrac{C_f + C_r}{mV} & 1 + \dfrac{C_r l_r - C_f l_f}{mV^2} & 0 & 0 & 0 & \dfrac{C_f}{mV} \\ -\dfrac{C_f l_f - C_r l_r}{J} & -\dfrac{C_r l_r^2 + C_f l_f^2}{JV} & 0 & 0 & 0 & \dfrac{C_f l_f}{J} \\ 0 & 1 & 0 & 0 & 0 & 0 \\ V & l_s \, V & & 0 & 0 & 0 \\ 0 & 0 & 0 & & 0 & -2\xi\omega & -\omega^2 \\ 0 & 0 & 0 & & 0 & 1 & 0 \end{bmatrix}$$

[Math 13]

$$\bar{B}_\delta = \begin{bmatrix} 0 \\ 0 \\ 0 \\ 0 \\ \omega^2 \\ 0 \end{bmatrix}$$

[Math 14]

$$\bar{B}_y = \begin{bmatrix} 0 \\ 0 \\ 0 \\ -1 \\ 0 \\ 0 \end{bmatrix}$$

[Math 15]

$$\delta_{ref} = K_\delta^{cl} \bar{x} + K_\delta^{ffwrd}$$

[Math 16]

$$\dot{\bar{x}} = \bar{A}\bar{x} + \bar{B}_\delta \delta_{ref}$$

On peut calculer le gain $K_\delta^{cl}$ selon l'équation suivante:

[Math 17]

$$K_\delta^{cl} = [k_1 \quad k_2 \quad k_3 \quad k_4 \quad k_5 \quad k_6]$$

En remplace $\delta_{ref} = K_\delta^{cl}\overline{x} + K_\delta^{ffwrd}$ à l'Equation Mat 10 pour obtenir un système en boucle fermée :

[Math 18]

$$\dot{\overline{x}} = \left(\overline{A} + \overline{B}_\delta K_\delta^{cl}\right)\overline{x} + \overline{B}_\delta K_\delta^{ffwrd} + \overline{B}_y \dot{y}_{L\_ref}$$

Le feedforward $K_\delta^{ffwrd}$ est calculé pour rendre l'erreur $e_{yL}$ à zéro en régime établi (bon suivi de trajectoire en régime établi) :

[Math 19]

$$\overline{x}(4) = -\left(\overline{A} + \overline{B}_\delta K_\delta^{cl}\right)^{-1}\left(\overline{B}_\delta K_\delta^{ffwrd} + \overline{B}_y \dot{y}_{L\_ref}\right)[0 \quad 0 \quad 0 \quad 1 \quad 0 \quad 0] = 0$$

En résolvant l'Equation Math 19, on obtient :

[Math 20]

$$K_\delta^{ffwrd} = -\frac{\dot{y}_{L\_ref}}{v}k_3$$

L'étape 34 de commande des systèmes de braquage (DAE) et/ou de freinage différentiel comprend en outre une étape 48 de commande du système de freinage différentiel pour les cas où la contrainte de contrôlabilité n'est pas ou plus respectée. Par exemple, lorsque le rapport entre l'écart latéral d'évitement et la distance longitudinale d'évitement est trop important.

Le freinage différentiel doit intervenir dans ce cas pour aider au braquage et suivre correctement la trajectoire d'évitement. Sans la contribution du freinage différentiel, la trajectoire réalisée serait erronée et pourrait mettre en danger le véhicule automobile.

Le paramètre $\alpha_{DB}$ est le seul paramètre à contrôler pour gérer le système de braquage et de freinage différentiel.

Le paramètre $\alpha_{DB}$ est calculé selon l'équation suivante :

[Math 21]

$$\alpha_{DB} = f\left(\Delta_{T_{AES}}\right) = \begin{cases} 0 \ quand \ T_{AES} \ n'est \ pas \ saturé \ \left(\left|T_{AES\_lim}\right| = \left|T_{AES}\right|\right) \\ 1 \ quand \ T_{AES} \ est \ très \ saturé \ \left(\left|T_{AES\_lim}\right| \ll \left|T_{AES}\right|\right) \\ \in (0,1) \ ailleurs \ \left(\left|T_{AES\_lim}\right| < \left|T_{AES}\right|\right) \end{cases}$$

$\Delta_{TAES}$ est calculé comme suit :

[Math 22]

$$\Delta_{T_{AES}} = d_a\left|T_{AES} - T_{AES\_int}\right| + d_s\left|T_{AES\_int} - T_{AES\_lim}\right|$$

Avec $d_a \geq 0$, $d_s \geq 0$ sont des paramètres de pondération (à choisir pendant la phase de la mise au point). Par exemple, si $d_s \geq d_a$, la saturation en rampe a plus de poids par rapport à la saturation en amplitude à la demande de freinage différentiel, et inversement.

Finalement, la fonction $f(\Delta_{T_{AES}})$ est choisie comme une fonction d'activation de type sigmoïde :

[Math 23]

$$f\left(\Delta_{T_{AES}}\right) = \frac{1}{1 + e^{-a_0\left(\Delta_{T_{AES}} - \Delta_0\right)}}$$

$a_0 > 0$ et $\Delta_0 \geq 0$ sont deux paramètres à choisir lors la mise au point sur véhicule pour avoir des comportements du véhicule souhaités. Avec ($a_0 = 4$, $\Delta_0 = 2$), le freinage différentiel réagit moins vite (à la saturation du braquage par la contrainte de contrôlabilité) qu'avec ($a_0 = 4$, $\Delta_0 = 1$).

En supposant que :

$$[\mathrm{Math}24]$$
$$\delta_{ref} = K_\delta^{cl}\bar{x} + K_\delta^{ffwrd} \text{ et}$$

avec le fait que le gain feed-forward $K_\delta^{ffwrd}$ peut éliminer l'impact de $\dot{y}_{L\_ref}$ sur l'erreur de suivi de trajectoire en régime établi, l'équation [Math 7] s'écrit :

$$[\mathrm{Math}7bis]$$
$$\dot{x} = (A(\boldsymbol{\alpha_{DB}}) + (\mathbf{1} - \boldsymbol{\alpha_{DB}})B_\delta K_\delta^{cl})x + B_M M_{DB_{ref}}$$

Le dernier objectif est de trouver la loi de commande de retour d'état statique suivante :

$$[\mathrm{Math}25]$$
$$M_{DB\_ref} = K_M x$$

Pour ce faire, on considère le système générique suivant :

$$[\mathrm{Math}26]$$
$$\dot{x}_s = A_s(\theta)x_s + B_s u_s$$

Avec :

$x_s$ est le vecteur d'état ;
$u_s$ est l'entrée de commande ;
$A_s$ et $B_s$ sont des matrices de dimensions appropriées ; et
$\theta$, le vecteur de paramètres exogènes connus et bornés dans un polytope $X_\theta$ de $2^{N_\theta}$ d'extrémités.

$$[\mathrm{Math}27]$$
$$X_\theta = \left\{\theta_{i\_min} \leq \theta_i \leq \theta_{i\_max}, i = 1: N_\theta\right\}$$

Considérons un contrôleur basé sur le retour d'état statique de la forme :

$$[\mathrm{Math}28]$$
$$u_s = K_s x_s$$

Quelques états doivent être bornés. Cette condition est représentée par les équations suivantes :

$$[\mathrm{Math}29]$$
$$\mathcal{X}_0 = \left\{x \in R^n : |H_{0j}x| \leq h_{0j}, j = 1: N_{\mathcal{X}_0}, \forall\theta\right\}$$

Avec :
$N_{x_o}$ est le nombre d'état borné, $h_{0j}$ est un constant positif et connu, $H_{0j}$ est un vecteur qui sélecte l'état considéré.
Ce critère est utilisé pour garantir la stabilité du véhicule pendant un manœuvre d'urgence (dynamique). La contrainte de stabilité est garantie en appliquant les inégalités suivantes :

$$[\mathrm{Math}30]$$
$$|[0 \quad 1 \quad 0 \quad 0 \quad 0 \quad 0 \quad 0]x| \leq r_{max}$$

[Math31]

$$\left|[1 \quad 0 \quad 0 \quad 0 \quad 0 \quad 0 \quad 0]x\right| \leq \beta_{max}$$

Les pôles du système en boucle fermés doivent être bornés dans une zone définie par un rayon $\gamma$, une distance minimale par rapport à l'axe imaginaire $\mu$, un angle d'ouverture $\varphi$. Ce critère est utilisé pour avoir les consignes de commande raisonnables et réalisable par les actionneurs.

Pour répondre au critère sur les états bornés, les conditions suivantes doivent être satisfaites.

[Math32]
$$\begin{bmatrix} P & * \\ H_{0i} & h_{0i}^2 \end{bmatrix} \succcurlyeq 0, i = 1, \ldots, N_{\chi_1}$$

Pour répondre au critère sur les pôles de la boucle fermée, les conditions de LMI suivantes doivent être satisfaites :

[Math33]

$$A_k Q + BR + (A_k Q + BR)^T + 2\mu Q \prec 0 \; ; R = KP^{-1} \text{ avec } k = 1:2^{N_\theta}$$

[Math34]

$$\begin{bmatrix} -\gamma Q & A_k Q + BR \\ * & -\gamma Q \end{bmatrix} \prec 0 \text{ avec } k = 1:2^{N_\theta}$$

[Math35]
$$\begin{bmatrix} sin(\varphi)(A_k Q + BR + (A_k Q + BR)^T) & cos(\varphi)(A_k Q + BR - (A_k Q + BR)^T) \\ * & sin(\varphi)(A_k Q + BR + (A_k Q + BR)^T) \end{bmatrix} \prec 0$$

avec $k = 1:2^{N_\theta}$

Dans les équations ci-dessus, $A_k$ est la matrice $A_s(\theta)$ calculée à l'extrémité *k-ième* du polytope $X_\theta$.

Une fois que les équations 31 à 35 sont résolues, on obtient la valeur du vecteur de retour d'état statique *K* à appliquer dans la loi de commande des systèmes de braquage et de freinage différentiel.

Grace à l'invention, le calcul automatique des gains K des contrôleurs permet de réduire le temps de conception du procédé de commande des systèmes de braquage et freinage. Le procédé de commande de braquage et de freinage différentiel en deux étapes permet la traçabilité et donc facilite la mise au point. En effet, l'étape de commande du braquage est réalisée pour répondre à un besoin pour les cas nominaux. Et l'étape de commande du freinage différentiel est réalisée pour les cas particuliers (saturation des couples, etc.).

De plus, la gestion des systèmes de braquage et de freinage différentiel tout en respectant la contrainte de contrôlabilité et de stabilité est simple avec l'utilisation d'un seul paramètre $\alpha_{DB}$.

**Revendications**

1. Procédé (30) d'évitement d'obstacles dans lequel :

   - on détecte un obstacle (1) à proximité d'un véhicule automobile (1) et on planifie une trajectoire d'évitement dudit obstacle,
   - on commande des systèmes de braquage (DAE) et de freinage différentiel configuré pour maîtriser la trajectoire d'évitement, et **caractérisé en ce que**

   - dans le cas où la courbure de la trajectoire n'est pas nulle, on calcule un contrôleur ( $K_\delta^{ffwrd}$ ) feed-forward configuré pour compenser l'effet de la dérivée de la trajectoire sur l'erreur de suivi de trajectoire et rendre l'erreur à zéro en régime établi, dans lequel on introduit un paramètre ($\alpha_{DB} \in [0,1]$) dans le pilotage du système de freinage différentiel configuré pour gérer les actions du braquage et du freinage différentiel en même temps, lorsque le paramètre ($\alpha_{DB}$) est égal à zéro, le freinage différentiel n'est pas nécessaire, seul le braquage est suffisant pour faire la trajectoire d'évitement, lorsque le paramètre ($\alpha_{DB}$) est égal à 1, on utilise la capacité totale du freinage différentiel pour aider au braquage à faire un manœuvre d'évitement dynamique.

2.  Procédé (30) selon la revendication 1, dans lequel lors de la commande des systèmes de braquage (DAE) et de freinage différentiel, on définit une contrainte de contrôlabilité lors de laquelle le couple de braquage (TAES) est limité en amplitude et en rampe et définit une contrainte de stabilité lors de laquelle le glissement et la vitesse de lacet (r) du véhicule sont bornés.

3.  Procédé (30) selon la revendication 2, dans lequel on vérifie si la contrainte de contrôlabilité est respectée, et si ladite contrainte est respectée, on commande uniquement le braquage des roues.

4.  Procédé (30) selon la revendication 3, dans lequel si ladite contrainte n'est pas respectée, on commande le système de freinage différentiel.

5.  Procédé selon l'une quelconque des revendications précédentes, dans lequel, on émet les hypothèses suivantes :

    - le couple de braquage ne dépasse pas la contrainte de contrôlabilité en amplitude et en rampe,
    - la trajectoire d'évitement est prédéfinie, et
    - le comportement du freinage différentiel est modélisé par un moment de lacet.

6.  Module (14) de commande des systèmes de braquage (DAE) et de freinage différentiel configuré pour émettre une consigne ($\delta$ref) de braquage des roues à un calculateur (20) de braquage des roues d'un véhicule automobile (2) et une consigne (MDB_Ref) de moment de lacet à un calculateur (22) de freinage dudit véhicule automobile, selon le procédé (30) d'évitement d'obstacles de la revendication 1.

7.  Module (14) selon la revendication 6, comprenant un contrôleur (24) en boucle fermée pour le système de braquage configuré pour suivre la trajectoire d'évitement de référence et répondant à la contrainte de stabilité du véhicule.

8.  Module (14) selon l'une des revendications 6 ou 7, comprenant un contrôleur (28) en boucle fermée pour le système de freinage différentiel configuré pour améliorer la performance de la boucle de braquage, notamment en cas de saturation de couple et la stabilité du véhicule.

9.  Système (10) d'évitement d'obstacles comprenant un module (12) de détection d'un obstacle (1) à proximité d'un véhicule automobile (2) et de planification d'une trajectoire d'évitement dudit obstacle et un module (14) de commande des systèmes de braquage (DAE) et de freinage différentiel selon l'une quelconque des revendications 6 à 8.

10. Véhicule automobile (2) comprenant un système pour repérer le véhicule automobile par rapport à sa voie de circulation et capable de déterminer l'écart latéral par rapport aux lignes de circulation à une distance de visé (yL) et l'angle de cap relatif dudit véhicule (ΨL), un système de détection des obstacles dans la trajectoire du véhicule configuré pour déterminer la distance longitudinale et le chevauchement de l'obstacle par rapport audit véhicule, un gyromètre, une direction automatique assistée (DAE), un module (14) de commande des systèmes de braquage (DAE) et de freinage différentiel selon l'une quelconque des revendications 6 à 8, un calculateur (20) configuré pour transformer la consigne d'angle de braquage dudit module (14) de commande en limite de couple à la direction assistée (DAE) pour réaliser le braquage, un calculateur (22) configuré pour transformer la consigne de moment de lacet dudit module (14) de commande en couples aux roues pour réaliser le freinage différentiel et un capteur de mesure de l'angle de volant et de sa vitesse.

**Patentansprüche**

1.  Verfahren (30) zur Hindernisvermeidung, bei dem:

    - ein Hindernis (1) in der Nähe eines Kraftfahrzeugs (1) detektiert wird und eine Ausweichtrajektorie für das Hindernis geplant wird,

- Lenk- (DAE) und Differenzialbremssysteme gesteuert werden, die dazu ausgestaltet sind, die Ausweichtrajektorie zu bewältigen, und **dadurch gekennzeichnet, dass**

- in dem Fall, in dem die Krümmung der Trajektorie nicht null ist, ein Feed-Forward-Regler ($K_\delta{}^{ffwrd}$) berechnet wird, der dazu ausgestaltet ist, die Wirkung der Ableitung der Trajektorie auf den Trajektorienverfolgungsfehler zu kompensieren und den Fehler im Beharrungszustand auf null zu bringen, wobei ein Parameter ($\alpha_{DB} \in [0,1]$) in die Ansteuerung des Differenzialbremssystems eingeführt wird, der dazu ausgestaltet ist, die Aktionen des Lenkens und der Differenzialbremsung gleichzeitig zu verwalten, wenn der Parameter ($\alpha_{DB}$) gleich null ist, die Differenzialbremsung nicht erforderlich ist, das Lenken allein ausreicht, um die Ausweichtrajektorie durchzuführen, wenn der Parameter ($\alpha_{DB}$) gleich 1 ist, die volle Kapazität der Differenzialbremsung genutzt wird, um beim Lenken zu unterstützen, um ein dynamisches Ausweichmanöver durchzuführen.

2. Verfahren (30) nach Anspruch 1, bei dem bei der Ansteuerung der Lenk- (DAE) und Differenzialbremssysteme eine Kontrollierbarkeitsbedingung definiert wird, bei der das Lenkdrehmoment (TAES) von der Amplitude und der Rampe her begrenzt wird, und eine Stabilitätsbedingung definiert wird, bei welcher der Schlupf und die Giergeschwindigkeit (r) des Fahrzeugs beschränkt werden.

3. Verfahren (30) nach Anspruch 2, bei dem überprüft wird, ob die Kontrollierbarkeitsbedingung erfüllt ist, und, wenn die Bedingung erfüllt ist, nur die Lenkung der Räder gesteuert wird.

4. Verfahren (30) nach Anspruch 3, bei dem, wenn die Bedingung nicht erfüllt ist, das Differenzialbremssystem gesteuert wird.

5. Verfahren nach einem der vorhergehenden Ansprüche, bei dem die folgenden Hypothesen ausgegeben werden:

   - das Lenkdrehmoment überschreitet die Kontrollierbarkeitsbedingung von der Amplitude und der Rampe her nicht,
   - die Ausweichtrajektorie ist vordefiniert, und
   - das Verhalten der Differenzialbremsung wird durch ein Giermoment modelliert.

6. Modul (14) zur Steuerung der Lenk- (DAE) und Differenzialbremssysteme, das dazu ausgestaltet ist, einen Lenksollwert ($\delta$ref) für die Räder an einen Lenkrechner (20) für die Räder eines Kraftfahrzeugs (2) und einen Giermomentsollwert (MDB_Ref) an einen Bremsrechner (22) des Kraftfahrzeugs nach dem Verfahren (30) zur Hindernisvermeidung des Anspruchs 1 auszugeben.

7. Modul (14) nach Anspruch 6, umfassend einen Regelkreis-Regler (24) für das Lenksystem, der dazu ausgestaltet ist, die Referenzausweichtrajektorie zu verfolgen, und die Stabilitätsbedingung des Fahrzeugs erfüllt.

8. Modul (14) nach einem der Ansprüche 6 oder 7, umfassend einen Regelkreis-Regler (28) für das Differenzialbremssystem, der dazu ausgestaltet ist, die Leistung des Lenkkreises, insbesondere im Fall einer Drehmomentsättigung, und die Stabilität des Fahrzeugs zu verbessern.

9. System (10) zur Hindernisvermeidung, umfassend ein Modul (12) zur Detektion eines Hindernisses (1) in der Nähe eines Kraftfahrzeugs (2) und zur Planung einer Ausweichtrajektorie für das Hindernis und ein Modul (14) zur Steuerung der Lenk- (DAE) und Differenzialbremssysteme nach einem der Ansprüche 6 bis 8.

10. Kraftfahrzeug (2), umfassend ein System zum Orten des Kraftfahrzeugs in Bezug auf seine Fahrspur, das zudem in der Lage ist, die seitliche Abweichung in Bezug auf die Markierungslinien in einem Zielabstand (yL) und den jeweiligen Kurswinkel des Fahrzeugs ($\Psi$L) zu bestimmen, ein System zur Detektion der Hindernisse in der Trajektorie des Fahrzeugs, das dazu ausgestaltet ist, den Längsabstand und die Überlappung des Hindernisses in Bezug auf das Fahrzeug zu bestimmen, ein Gyrometer, eine unterstützte automatische Lenkung (DAE), ein Modul (14) zur Steuerung der Lenk- (DAE) und Differenzialbremssysteme nach einem der Ansprüche 6 bis 8, einen Rechner (20), der dazu ausgestaltet ist, den Lenkwinkelsollwert des Moduls (14) zur Steuerung in einen Drehmomentgrenzwert für die unterstützte Lenkung (DAE) umzuwandeln, um das Lenken auszuführen, einen Rechner (22), der dazu ausgestaltet ist, den Giermomentsollwert des Moduls (14) zur Steuerung in Drehmomente an den Rädern umzuwandeln, um die Differenzialbremsung auszuführen, und einen Sensor zum Messen des Lenkradwinkel und seiner Geschwindigkeit.

**Claims**

1. Obstacle-avoidance method (30) wherein:

   - an obstacle (1) in the vicinity of a motor vehicle (1) is detected and an obstacle-avoidance path for avoiding said obstacle is planned,
   - steering (DAE) and differential braking systems configured to handle the avoidance path are commanded, and **characterized in that**
   - if the curvature of the path is nonzero, then a feedforward controller ($K_\delta^{ffwrd}$) configured to compensate for the effect of the deviation of the path on the path following error and to bring the error to zero in the steady state is calculated, wherein a parameter ($\alpha_{DB} \in [0,1]$) is introduced into the control of the differential braking system configured to manage the steering and differential-braking actions at the same time; when the parameter ($\alpha_{DB}$) is equal to zero, differential braking is not needed and steering alone will suffice to follow the avoidance path; when the parameter ($\alpha_{DB}$) is equal to 1, the entire differential braking capacity is used to assist with the steering in order to effect a dynamic avoidance manoeuvre.

2. Method (30) according to Claim 1, wherein, when the steering (DAE) and differential braking systems are commanded, there is defined a controllability constraint during which the steering torque (TAES) is limited in amplitude and in gradient and defines a stability constraint during which the slip and yaw rate (r) of the vehicle are bounded.

3. Method (30) according to Claim 2, wherein a check is performed to determine whether the controllability constraint is respected, and if said constraint is respected, only the steering of the wheels is commanded.

4. Method (30) according to Claim 3, wherein, if said constraint is not respected, the differential braking system is commanded.

5. Method according to any one of the preceding claims, wherein the following hypotheses are postulated:

   - the steering torque does not exceed the controllability constraint in amplitude and in gradient,
   - the avoidance path is predefined, and
   - the behaviour of the differential braking is modelled by a yaw moment.

6. Module (14) for controlling the steering (DAE) and differential braking systems and configured to issue a wheel steering setpoint ($\delta$ref) to a wheel-steering computer (20) of a motor vehicle (2) and a yaw moment setpoint (MDB_Ref) to a braking computer (22) of said motor vehicle, according to the obstacle-avoidance method (30) of Claim 1.

7. Module (14) according to Claim 6, comprising a closed-loop controller (24) for the steering system configured to follow the reference avoidance path and responding to the vehicle stability constraint.

8. Module (14) according to one of Claims 6 or 7, comprising a closed-loop controller (28) for the differential braking system configured to improve the performance of the steering loop, notably in the event of torque saturation, and the stability of the vehicle.

9. Obstacle-avoidance system (10) comprising an obstacle detection module (12) detecting an obstacle (1) in the vicinity of a motor vehicle (2) and planning an obstacle-avoidance path for avoiding said obstacle, and a control module (14) for controlling steering (DAE) and differential braking systems according to any one of Claims 6 to 8.

10. Motor vehicle (2) comprising a system for locating the motor vehicle with respect to its traffic lane and capable of determining the lateral offset with respect to the lane markings at a sighting distance (yL) and the relative heading angle of said vehicle ($\Psi$L), an obstacle detection system detecting obstacles in the path of the vehicle and configured to determine the longitudinal distance and overlap of the obstacle with respect to said vehicle, a gyrometer, an automatic power steering (DAE), a control module (14) controlling the steering (DAE) and differential braking systems according to any one of Claims 6 to 8, a computer (20) configured to convert the steering angle setpoint from said control module (14) into a torque limit for the power steering (DAE) in order to perform the steering, a computer (22) configured to convert the yaw moment setpoint from said control module (14) into torques at the wheels in order to perform the differential braking, and a sensor measuring the angle and rate of turning of the steering wheel.

## FIG.1

## FIG.2

EP 3 880 526 B1

# FIG.3

```
          ┌──────────┐      30
          │    32    │   ↙
          └────┬─────┘
               │
               ▼
          ┌──────────┐
          │    34    │
          └────┬─────┘
               │
               ▼
          ┌──────────┐
          │    36    │
          └──────────┘
```

# FIG.4

```
          ┌──────────┐
          │    40    │
          └────┬─────┘
               │          34
               ▼       ↙
          ┌──────────┐
          │    42    │
          └────┬─────┘
               │
               ▼
          ┌──────────┐
          │    44    │
          └────┬─────┘
               │
               ▼
          ┌──────────┐
          │    45    │
          └────┬─────┘
               │
        ┌──────┴──────┐
        ▼             ▼
   ┌─────────┐   ┌─────────┐
   │   46    │   │   48    │
   └────┬────┘   └────┬────┘
        └──────┬──────┘
               │
               ▼
```

**EP 3 880 526 B1**

## RÉFÉRENCES CITÉES DANS LA DESCRIPTION

**Documents brevets cités dans la description**

- WO 200773772 A1
- FR 2695613 A1
- EP 1790542 A1
- KR 100851120
- JP 2018167732 A